# EUROPÄISCHE PATENTSCHRIFT

(11) **EP 1 433 184 B1**
(45) Veröffentlichungstag und Bekanntmachung des Hinweises auf die Patenterteilung: **23.03.2016**
(21) Anmeldenummer: 02776746.6
(22) Anmeldetag: 24.09.2002
(51) Int. Cl.: G01Q 70/02, G01Q 30/14, B82Y 35/00

(54) **VORRICHTUNG ZUM HALTEN EINER MESSSONDE FÜR EIN RASTERKRAFTMIKROSKOP**
DEVICE FOR FIXING A MEASURING PROBE FOR A SCANNING FORCE MICROSCOPE
DISPOSITIF POUR MAINTENIR UNE SONDE DE MESURE POUR UN MICROSCOPE À FORCE ATOMIQUE À BALAYAGE

(30) Priorität: 24.09.2001 DE 10148322
(43) Veröffentlichungstag der Anmeldung: 30.06.2004
(73) Patentinhaber: JPK Instruments AG, 12099 Berlin (DE)
(72) Erfinder: SÜNWOLDT, Olaf, 12055 Berlin (DE); HASCHKE, Heiko, 18109 Rostock (DE)
(74) Vertreter: Bittner, Thomas L.
(86) Internationale Anmeldenummer: PCT/DE2002/003689
(87) Internationale Veröffentlichungsnummer: WO 2003/028036

(56) Entgegenhaltungen:
- EP-A2- 0 759 537
- WO-A-02/071412
- US-A- 5 291 775
- US-A- 5 804 710
- US-B1- 6 176 122
- US-B1- 6 310 342

## Beschreibung

Die Erfindung betrifft eine Vorrichtung zum Halten einer Meßsonde für ein Rasterkraftmikroskop, mit einem Haltebauteil zur Montage in einer Meßanordnung eines Rasterkraftmikroskops.

Die Rastersondenmikroskopie ist eine Untersuchungsmethode, mit der eine zerstörungsfreihe Charakterisierung von Oberflächen einer Meßprobe möglich ist. Die Rastersondenmikroskopie dient beispielsweise zum Bestimmen der Topographie der untersuchten Oberfläche mit hoher Auflösung. Mit Hilfe der Rastersondenmikroskopie ist es weiterhin möglich, andere Eigenschaften von Oberflächen zu ermitteln, beispielsweise die Adhäsionskraft oder die Elastizität. Zur Klasse der Rastersondenmikroskope gehören unter anderem auch optische Nahfeldmikroskope oder Rastertunnelmikroskope.

Für den Betrieb eines Rastersondenmikroskops ist die Halterung der zur Untersuchung der Meßprobe genutzten Meßsonden von wesentlicher Bedeutung. In allen Rastersondenmikroskopen muß die Meßsonde so befestigt werden, daß eine entsprechende physikalische Meßgröße in Abhängigkeit von einem Abstand zwischen der Meßprobe und einer Meßspitze der Meßsonde detektiert werden kann. Hierbei muß die Halterung der Meßsonde gewährleisten, daß die Meßgröße, welche mit Hilfe des Rastersondenmikroskops gemessen wird, senkrecht zur Oberfläche der Meßprobe mit einer Auflösung im sub-Angström-Bereich und in einer Ebene der Oberfläche der Meßprobe mit zumindest Nanometer-Auflösung detektiert werden kann, was unter anderem eine ausreichende mechanische Stabilität der Halterung der Meßsonde voraussetzt.

Eine Form der Rastersondenmikroskopie ist die Rasterkraftmikroskopie, bei der als Meßsonde ein Federbalken genutzt wird, welcher in der Regel als Cantilever bezeichnet wird. An einem Ende des Cantilevers befindet sich eine Meßspitze. Die Meßsonde (Cantilever) besteht bevorzugt aus Silizium, es können jedoch auch Materialien wie Siliziumnitrit oder Diamant verwendet werden. Der Cantilever mit der Meßspitze wird in der Regel an einem Substrat gehaltert, das auch als Basis bezeichnet wird. Bei der Halterung der Meßsonde eines Rasterkraftmikroskops dient in aller Regel die Basis zum Befestigen der Meßsonde. Zur Vereinfachung wird im folgenden jedoch stets von einer Befestigung der Meßsonde gesprochen. Moderne Rastersondenmikroskope erlauben ein Betreiben des Mikroskops auch bei Untersuchungen, in denen die Meßprobe von einem Fluid, beispielsweise Luft oder einer Flüssigkeit umgeben ist. Rastersondenmikroskope verfügen darüber hinaus über verschiedene Meßarten, beispielsweise statische oder dynamische Messungen. Eine geeignete Halterung der Meßsonde muß auch diesen verschiedenen Anforderungen genügen.

Aus dem Stand der Technik sind zwei Arten der Halterung der Meßsonde in einem Rastersondenmikroskop bekannt. Bei eitler Art der Halterung wird die Meßsonde aufgeklebt oder mit Hilfe einer Flüssigkeit gehalten, die klebende Eigenschaften aufweist. Als zweite Art der Halterung ist eine vollständig mechanisch ausgebildete Halterung bekannt, bei der üblicherweise eine Feder genutzt wird. Die Befestigung der Meßsonde mit Hilfe eines Klebemittels ist für viele Rastersondenmikroskope ungeeignet, da die am häufigsten verwendeten Klebematenahen eine langfristige, nur nut Hilfe von Lösungsmitteln wieder zu trennende Verbindung zwischen einem Haltebauteil, an dem die Meßsonde zu befestigen ist, und der Meßsonde bilden. Ferner ist die Verwendung von klebenden Materialien beim Betrieb von Rastersondenmikroskopen in Flüssigkeiten aufgrund einer eventuellen chemischen Veränderung der Flüssigkeit, in welcher sich die Meßprobe befindet in Folge einer Wechselwirkung mit dem Klebematerial sehr kritisch. Daher wird häufig eine mechanische Befestigung mit Hilfe einer Federhalterung verwendet. Hierbei ist eine geeignete Spannkraft zur Befestigung der Meßsonde gewährleistet, und eine Beeinflussung der Meßexperimente findet in der Regel nicht statt. Bei bekannten Vorrichtungen ist die Feder ihr die Klemmbefestigung der Meßsonde an dem Haltebauteil mittels einer Schraubverbindung befestigt. Bei anderen bekannten Vorrichtungen ist ein Draht mittels einer Durchführung durch das Haltebauteil zum Ort der Meßsonde geführt und eine notwendige Federkraft wird auf der anderen Seite dieser Durchführung gebildet.

Die US 6,176,122 zeigt eine Cantilevereinheit mit einem Substrat und einen an dem Substrat angebrachten Cantilever vom Selbsterfassungstyp. Das Substrat ist mit einer elastischen Elektrode an einer Halterung gehalten.

Die US 6,310,342 beschreibt Rastersondenmikroskope und Rastersondenköpfe.

Die WO 02/071412 zeigt ein Rastersondenmikroskop mit Mitteln zum Steuern der Atmosphäre, die die Sondenspitze und die abzutastende Oberfläche umgibt.

Die US 5,804,710 zeigt ein Rastenkraftmikroskop-System mit einem bidirektionalen Aktuator, um die Rasterkraftmikroskop-Spitze in einer Ebene der abzutastenden Fläche und senkrecht zur Ebene der abzutastenden Fläche zu bewegen.

Aufgabe der Erfindung ist es, eine verbesserte Vorrichtung zum Halten einer Meßsonde für ein Rasterkraftmikroskop, anzugeben, die kostengünstig hergestellt werden kann und eine mit wenig Aufwand realisierbare, lösbare Montage der Meßsonde ermöglicht. Diese Aufgabe wird durch eine Vorrichtung zum Halten einer Meßsonde für ein Rastersondenmikroskop nach Anspruch 1 gelöst. Vorteilhafte Ausgestaltungen der Erfindung sind Gegenstand von abhängigen Unteransprüchen.

Ein wesentlicher Vorteil, welcher mit der Erfindung gegenüber dem Stand der Technik erreicht ist, besteht darin, daß aufgrund der Selbstarretierung des Klemmbauteils keine zusätzlichen Mittel zur Befestigung des Klemmbauteils an dem Haltebauteil notwendig sind. Auf diese Weise wird die im Stand der Technik verwendete Schraubverbindung eingespart.

Darüber hinaus besteht der Vorteil, daß das Haltebauteil auch aus Materialien gefertigt werden kann, in denen sich das bei der Schraubverbindung nach dem Stand der Technik notwendige Gewinde nur mit erheblichen Aufwand oder gar nicht realisieren läßt. Da die Schraubverbindung eingespart wurde, können auch Materialien für die Fertigung des Haltebauteils verwendet werden, die für die Ausbildung der Schraubverbindung ungeeignet oder gar nicht verwendbar sind.

Eine zweckmäßige Weiterbildung der Erfindung sieht vor, daß das Klemmbauteil an dem Haltebauteil lösbar befestigt ist, wodurch das Entfernen des Klemmbauteils von dem Haltebauteil, beispielsweise zum Reinigen oder zum Austauschen erleichtert ist.

Eine elastische Spannkraft zum Halten der Meßsonde an dem Haltebauteil wird bei einer zweckmäßigen Ausgestaltung der Erfindung dadurch erreicht, daß das Klemmbauteil ein Federbauteil ist. Die Verwendung eines Federbauteils hat darüber hinaus den Vorteil, daß die Selbstarretierung des Klemmbauteils an dem Haltebauteil mit Hilfe einer Federspannkraft des Federbauteils auf einfache Weise mit realisiert werden kann.

Eine Anpassung der Vorrichtung mit dem Haltebauteil und der daran befestigten Meßsonde an verschiedene Meßaufgaben kann bei einer vorteilhaften Ausführungsform der Erfindung dadurch erreicht werden, daß das Klemmbauteil eine Beschichtung aufweist. Auf diese Weise kann insbesondere eine chemische Reaktion des Klemmbauteils mit einem Fluid unterbunden werden, in welchem sich die Meßprobe beim Ausführen der Rastersondenmikroskopie befindet.

Zur Realisierung der Selbstarretierung des Klemmbauteils an dem Haltebauteil mit Hilfe einfacher mechanischer Mittel kann eine zweckmäßige Weiterbildung der Erfindung vorsehen, daß eine Selbstarretierung des Klemmbauteils in einer Vertiefung an dem Haltebauteil gebildet ist.

Bei einer bevorzugten Ausgestaltung der Erfindung kann vorgesehen sein, daß ein Montageabschnitt der Meßsonde zumindest teilweise in einer an dem Haltebauteil gebildeten weiteren Vertiefung angeordnet ist. Hierdurch ist eine möglichst platzsparende und mechanisch stabile Befestigung der Meßsonde an dem Haltebauteil erreicht.

Eine bevorzugte Fortbildung der Erfindung kann vorsehen, daß die Meßsonde mit Hilfe des Klemmbauteils im Bereich einer unteren Oberfläche des Haltebauteils und mit einer Neigung zu der unteren Oberfläche gehalten wird, so daß eine Meßspitze der Meßsonde von der unteren Oberfläche absteht. Hierdurch kann gewährleistet werden, daß die Meßspitze den tiefsten Punkt der Meßanordnung des Rastersondenmikroskops bildet.

Zweckmäßig kann bei einer Ausführungsform der Erfindung vorgesehen sein, daß das Klemmbauteil im Bereich der unteren Oberfläche an dem Haltebauteil befestigt ist. Auf diese Weise ist es möglich, ein hinsichtlich seiner Abmessungen minimiertes Klemmbauteil zur Befestigung der Meßsonde an dem Haltebauteil zu verwenden.

Bei einer bevorzugten Ausgestaltung der Erfindung ist vorgesehen, daß das Klemmbauteil in einem Bereich des Haltebauteils montiert ist, welcher mittels einer fluiddichten Dichtung von einem anderen Bereich des Haltebauteils abgegrenzt ist. Bei der Untersuchung einer Meßprobe in einen Fluid werden die beiden Bereiche des Haltebauteils mit Hilfe der fluiddichten Dichtung von einander abgegrenzt, wobei der eine Bereich des Haltebauteils dann von dem Fluid zumindest teilweise bedeckt ist. Bei der Montage des Klemmbauteils in diesem Bereich des Haltebauteils ist es nicht notwendig, daß Klemmbauteil durch die fluiddichte Dichtung hindurch zu führen, so daß die aus dem Stand der Technik bekannten Dichtprobleme nicht auftreten. Beim Austreten des Fluids aus dem Meßbereich, in dem sich die Meßprobe befmdet; kann es zu Schwierigkeiten derart kommen, daß-wegen der elektrisehen Anschlüsse im Bereich der Meßanordnung Kurzschlüsse auftreten, die eine Gefahr für das Rastersondenmikroskop und den Benutzer darstellen. Darüber hinaus wäre ein Klemmbauteil, das durch die fluiddichte Dichtung hindurch gebildet ist, nur schwierig auszutauschen. Das Durchführen des Klemmbauteils durch eine Dichtung, wie es im Stand der Technik teilweise realisiert ist, verkompliziert insgesamt den Aufbau und führt zu Mehrkosten bei der Herstellung. Darüber hinaus ergibt sich in Verbindung mit der hier vorgeschlagenen Weiterbildung der Erfindung der Vorteil, daß die Fluidmenge, welche die Meßprobe beim Untersuchen umgibt, minimiert werden kann.

Eine bevorzugte Ausführungsform der Erfindung sieht vor, daß das Klemmbauteil auf einer Seitenfläche des Haltebauteils befestigt ist. Hierdurch ist eine weitgehende räumliche Trennung des Klemmbauteils und der Meßsonde, insbesondere von der Meßspitze der Meßsonde ermöglicht.

Zweckmäßig kann bei einer Fortbildung der Erfindung vorgesehen sein, daß das Haltebauteil einen Lichtdurchgangsabschnitt aus einem lichttransparenten Material aufweist, so daß Lichtstrahlen durch den Lichtdurchgangsabschnitt zu der Meßsonde oder von der Meßsonde durch den Lichtdurchgangsabschnitt gelangen können. Bei den Lichtstrahlen, die durch den Lichtdurchgangsabschnitt gelangen, kann es sich beispielsweise um Meßlichtstrahlen handeln, die bei einem Rastersondenmikroskop, in dem das Lichtzeigerprinzip verwendet wird, zu der Meßsonde gelangen müssen. Der Lichtdurchgangsabschnitt kann jedoch auch dazu genutzt werden, die Meßprobe mit einem Kondensorlicht zu beleuchten, so daß zusätzlich zu der rastersondenmikroskopischen Untersuchung eine Beobachtung der Meßprobe mit einem Lichtmikroskop ermöglicht wird. Weiterhin kann durch den Lichtdurchgangsabschnitt Licht von der Meßprobe gelangen, welches dann mit Hilfe eines Auflichtmikroskops zur Untersuchung der Probe genutzt werden kann.

Ein optimierter Lichtdurchgang durch den Lichtdurchgangsabschnitt ist bei einer vorteilhaften Weiterbildung der Erfindung dadurch erreicht, daß eine obere und eine untere Stirnfläche des Lichtdurchgangsabschnitts poliert sind.

Als lichttransparente Materialien für den Lichtdurchgangsabschnitt des Haltebauteils können beispielsweise Glas oder Plexiglas verwendet werden, was eine kostengünstige Herstellung des Haltebauteils unterstützt. Darüber hinaus können diese Materialien auch in Verbindung mit verschiedensten Fluiden genutzt werden, ohne daß nachteilige chemische- Reaktionen zwischen dem Fluid über der Meßprobe und dem Glas bzw. Plexiglas auftreten.

Um die Verwendung von dynamischen Untersuchungsmethoden mit Hilfe des Rastersondenmikroskops zu ermöglichen, kann bei einer Ausgestaltung der Erfindung vorgesehen sein, daß an dem Haltebauteil eine Spule und/oder ein Piezo-Bauteil angeordnet sind. Bei den dynamischen Untersuchungsmethoden oszilliert die Meßsonde. Eine magnetische Anregung der Meßsonde kann hierbei mittels einer Spule realisiert werden. Bei einer Oszillation des Piezo-Bauteils wird auch die Meßsonde zum Schwingen angeregt. Dieser Effekt kann dann ausgenutzt werden, um z. B. über die sogenannte Loch-In-Technik ein besseres Signal-RauschVerhältnis zu erhalten. Des weiteren werden bei diesen Meßsonden z. B. laterale Kräfte während der Abbildung vermieden oder zumindest verringert. Bei der Anregung eines magnetischen Sonde über eine Spule ergeben sich im wesentlichen die gleichen Vorteile.

Vorteilhaft kann bei einer Ausgestaltung der Erfindung vorgesehen sein, daß an dem Haltebauteil ein Befestigungsbauteil angeordnet ist. Mit Hilfe des Befestigungsbauteils kann eine mechanische Kopplung des Haltebauteils an die übrige Meßanordnung des Rastersondenmikroskops realisiert werden, wobei das Befestigungsbauteil zur Aufnahme mechanischer Kräfte beim Anbringen an der übrigen Meßanordnung dient. Auf diese Weise ist das Haltebauteil vor eine unbeabsichtigten Zerstörung beim Befestigen geschützt, beispielsweise wenn das Haltebauteil vollständig aus Glas oder Plexiglas ist, was bevorzugt sein kann, wenn eine optimierte Ausleuchtung der Meßprobe vorgesehen ist.

Die Erfindung wird im folgenden anhand von Ausführungsbeispielen unter Bezugnahme auf eine Zeichnung näher erläutert. Hierbei zeigen:
- Figur 1: eine schematische Darstellung einer Meßanordnung für ein Rastersondenmikroskop;
- Figur 2: ein Haltebauteil zum Halten einer Meßsonde; und
- Figur 3: ein anderes Haltebauteil zum Halten einer Meßsonde.

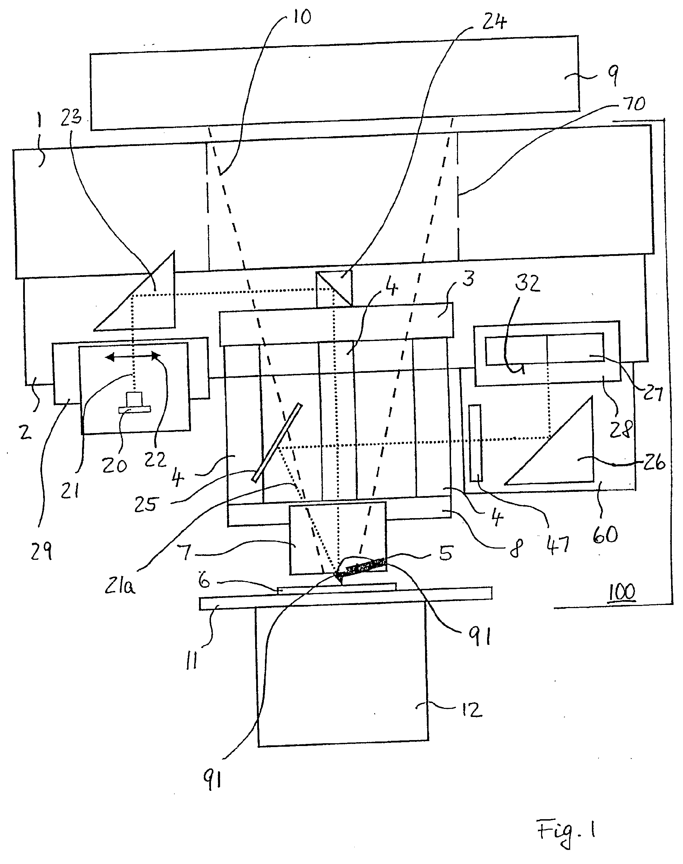

Figur 1 zeigt eine schematische Darstellung einer Meßanordnung 100 für ein Rastersondenmikroskop, insbesondere ein Rasterkraftmikroskop mit einer lateralen Verlagerungseinheit 1, welche eine exakte Bewegung der mit der lateralen Verlagerungseinheit 1 verbundenen weiteren Bauteile in einer Ebene ermöglicht, die senkrecht zur Zeichenebene in Figur 1 verläuft. Die laterale Verlagergungseinheit 1 kann beispielsweise mit Hilfe von piezoelektrischen Bauelementen gebildet sein. Grundsätzlich können jedoch beliebige Arten von Vorrichtungen genutzt werden, die eine exakte Verlagerung in einer Ebene ermöglichen. An der lateralen Verlagerungseinheit ist ein Rahmenbauteil 2 montiert. An dem Rahmenbauteil 2 sind weitere Bauteile der in Figur 1 dargestellten Anordnung für ein Rastersondenmikroskop derart befestigt, daß sie mit Hilfe der lateralen Verlagerungseinheit 1 in lateraler Richtung bewegt werden können.

An dem Rahmenbauteil 2 wird eine Glasplatte 3 gehalten, die alternativ als eine Platte aus einem beispielsweise nicht transparenten Material, insbesondere Aluminium, mit einem Glasfenster ausgebildet sein kann. An der Glasplatte 3 sind mehrere vertikale Verlagerungseinheiten 4 angebracht, die vorzugsweise als piezoelektrische Bauteile ausgebildet sind. Die vertikalen Verlagerungseinheiten 4 sind so angeordnet, daß sie nicht oder zumindest nicht in störender Art und Weise in den Kondensorlichtweg 10 hinein reichen. Um eine hohe Stabilität zu gewährleisten, sind die vertikalen Verlagerungseinheiten 4 aber möglichst nahe an dem Kondensorlichtweg 10 angeordnet.

Mit Hilfe der vertikalen Verlagerungseinheit 4 kann eine zum Ausführen der rastersondenmikroskopischen Untersuchungen vorgesehene Meßsonde 5, bei der es sich im Fall des Rasterkraftmikroskops um einen sogenannten Cantilever handelt, in einer vertikalen Richtung, die senkrecht zu der lateralen Verlagerungsebene verläuft, exakt positioniert werden. Dieses ist notwendig, um den Abstand der Meßsonde 5 zu einer Probe 6 mit hoher Präzision einzustellen und zu messen. Die Meßsonde 5 ist an einen Glaskörper 7 montiert, welcher über ein Ringbauteil 8 an die mehreren lateralen Verlagerungseinheiten 4 gekoppelt ist. Damit die Meßanordnung 100 auch für eine Verwendung unter Flüssigkeiten geeignet ist, muß es einen definierten Übergang von der Luft zum Wasser geben. Dieser wird mit Hilfe des Glaskörpers 7 vermittelt, dessen Größe wiederum so gestaltet sein ist, daß die Kondensorlichtweg 10 nicht behindert ist. Der Glaskörper 7 weist vorteilhaft eine Nut auf, die einen zur Probenebene geneigten Einbau der Meßsonde 5 erlaubt.

Oberhalb der Meßanordnung 100 ist über der lateralen Verlagerungseinheit 1 ist eine Kondensorbeleuchtung 9 vorgesehen, welche Kondensorlicht erzeugt. In Figur 1 ist ein Kondensorlichtweg 10 kegelförmig ausgebildet, was mit Hilfe gestrichelter Linien dargestellt ist. Der Kondensorlichtweg 10 verläuft im wesentlichen mittig durch die laterale Verlagerungseinheit 1, die zu diesem Zweck eine Öffnung 70 aufweist, die Glasplatte 3, das Ringbauteil 8 sowie den Glaskörper 7 hindurch, um die auf einem Probenträger 11 angeordnete Probe 6 zu beleuchten. Bei dem Probenträger 11 kann es sich beispielsweise um einen kommerziell verfügbaren Objektträger oder eine Petrischale handeln. Die Kondensorbeleuchtung 9 dient zur Untersuchung der Probe 6 mit Hilfe eines Objektivs 12, das unterhalb des Probenträgers 11 angeordnet ist.

Die in Figur 1 dargestellt Ausführung der Meßanordnung 100 für ein Rastersondenmikroskop ermöglicht somit eine Beleuchtung der Probe 6 mit Kondensorlicht, auch wenn die Probe 6 auf dem Probenträger 11 für eine rastersondenmikroskopische Untersuchung angeordnet ist. Das Kondensorlicht kann sich in üblicher Weise, beispielsweise kegelförmig entlang des Kondensorlichtwegs 10 ausbreiten. Die im Bereich des Kondensorlichtwegs 10 angeordneten Bauteile der Anordnung nach Figur 1 weisen zur Vermeidung einer Behinderung der Lichtausbreitung des Kondensorlichts beispielsweise Öffnungen auf, durch die das Kondensorlicht gelangen kann, oder sind aus einem lichttransparenten Material gebildet, wie beispielsweise die Glasplatte 3 und der Glaskörper 7. Auf dem Weg von der Kondensorbeleuchtung 9 zu der Probe 6 ist keine Umlenkung des Kondensorlichts mit Hilfe zusätzlicher optischer Bauelemente notwendig. Solche optischen Umlenkungen führen in der Regel zu einer verminderten Qualität der Ausleuchtung der Probe 6 für die lichtmikroskopische Untersuchung mit Hilfe des Objektivs 12.

Mittels der in Figur 1 dargestellten Meßanordnung 100 kann die Probe 6 rastersondenmikroskopisch untersucht werden. Zu diesem Zweck erzeugt eine vorzugsweise als Laser ausgebildete Lichtquelle 20 Meßlichtstrahlen 21, die über eine Fokusierlinse 22, ein Prisma 23 sowie einen Strahlteiler 24 auf die Meßsonde 5 geleitet werden. Der Stahlteiler 24 ist in seiner Größe und in seinem Abstand zur Meßprobe 6 so gewählt, daß Phasenringe des Lichts von der Kondensorbeleuchtung 9, die den Phasenkontrast ermöglichen, entweder außen am Strahlteiler 24 vorbeigehen oder vollständig durch den Strahlteiler 24 hindurch verläuft. Damit das Licht des Kondensorbeleuchgtung 9 außerhalb des Strahlteilers 24 vollständig ungestört seitlich an diesem vorbeigehen kann, ist der Halter (d.h. die Glasplatte 3) des Strahlteilers 24 aus Glas oder einem anderen transparenten Material gefertigt. Eine andere Befestigung, beispielsweise mit einem Metallrahmen könnte vorgesehen sein, würde aber den Kondensorlichtweg 10 erheblich stören.

Gemäß dem Lichtzeigerprinzip werden die auf die Meßsonde 5 einfallenden Meßlichtstrahlen 21 auf einer Reflexionsfläche 91 eines Reflexionsbauteils 90 reflektiert und als reflektierte Meßlichtstrahlen 21 a über einen Umlenkspiegel 25 und ein weiteres Prisma 26 auf eine Photodiode 27 gelenkt. Die Photodiode 27 weist zweckmäßig eine Empfängerfläche 32 mit zwei Segmenten auf. In Abhängigkeit von der Verbiegung der Meßsonde 5 ändert sich die Verteilung der reflektierten Meßlichtstrahlen 21a zwischen den beiden Segmenten der Empfängerfläche 32 der Photodiode 27. Die im Bereich der beiden Segmente erzeugten Signale sind ein Maß für die Verbiegung der Meßsonde 5, wobei die Verbiegung der Meßsonde 5 wiederum Folge einer Wechselwirkung der Meßsonde 5 mit der Probe 6 ist. Es handelt sich hierbei um das übliche in Rastersondenmikroskopen, insbesondere Rasterkraftmikroskopen genutzte Lichtzeiger-Meßprinzip, welches deshalb nicht weiter ausgeführt wird.

Die Photodiode 27 ist mit Hilfe einer Verstelleinheit 28 an dem Rahmenbauteil 2 montiert. In ähnlicher Weise sind die Lichtquelle 20 und die Fokusierlinse 22 mit Hilfe einer weiteren Verstelleinheit 29 an dem Rahmenbauteil 2 befestigt. Das weitere Prisma 26 und eine Korrekturlinse 47, welche zur Korrektur von Meßwertverfälschungen bei einer Relativbewegung des Reflexionsbauteils 90 zu übrigen Bauteilen des Lichtzeigers, insbesondere der Photodiode 27, dem Prisma 23, dem Strahlteiler 24, dem Umlenkspiegel 25, der Korrekturlinse 47, dem weiteren Prisma 26 sowie die Lichtquelle 20, dient, sind mit Hilfe eines Befestigungsbauteils 60 an dem Rahmenbauteil 2 montiert.

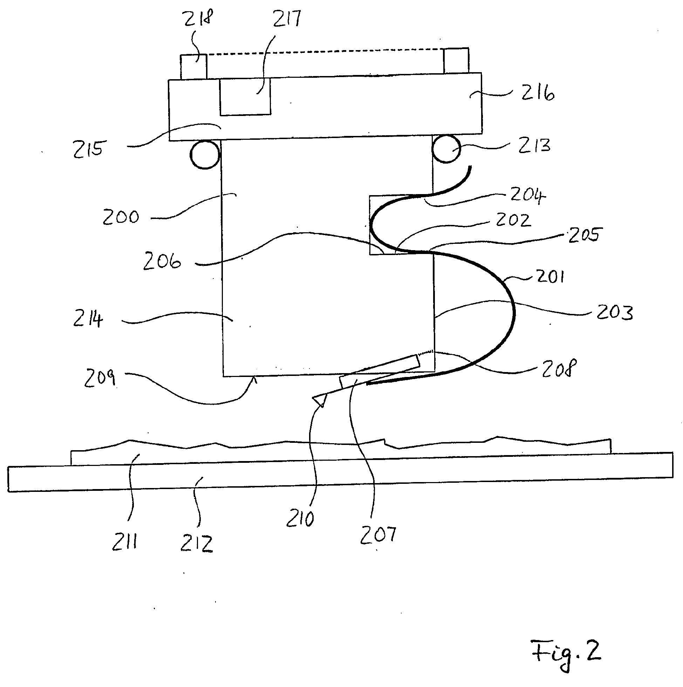

Figur 2 zeigt ein Haltebauteil 200, an dem ein Klemmbauteil 201 selbstarretierend in einer Vertiefung 202 im Bereich einer Seitenfläche 203 befestigt ist. Das Klemmbauteil 201, welches als eine Feder ausgebildet ist, wird aufgrund einer Federkraft in der Vertiefung 202 gehalten, die dazu führt, daß Abschnitte 204, 205 des Klemmbauteils 201 gegen eine Innenwand 206 der Vertiefung 202 drücken. Das Haltebauteil 200 kann bei der Meßanordnung 100 nach Figur 1 die Funktion des Glaskörpers 7 hinsichtlich der Halterung der Meßsonde 5 übernehmen.

Eine Meßsonde 207 ist in einer weiteren Vertiefung 208 angeordnet. Die weitere Vertiefung 208 ist im Bereich einer unteren Oberfläche 209 des Haltebauteils 200 ausgebildet. Bei der weiteren Vertiefung 208 handelt es sich beispielsweise um eine Nut. Mit Hilfe des Klemmbauteils 201 wird die Meßsonde 207 in der weiteren Vertiefung 208 gehalten, wobei die weitere Vertiefung 208 so gebildet ist, daß die Meßsonde 207 zu der unteren Oberfläche 209 geneigt ist. Dies führt dazu, daß eine Meßspitze 210 der Meßsonde 207 von der unteren Oberfläche 209 des Haltebauteils 200 absteht und für eine Untersuchung einer Meßprobe 211 auf einem Meßprobenträger 212 genutzt werden kann. Ohne die Neigung müßte gewährleistet sein, daß die Meßspitze 210 länger ist als die Dicke des Klemmbauteils 201 in der Vertiefung 202.

In einem Bereich oberhalb des Klemmbauteils 201 ist eine fluiddichte Dichtung 213 ausgebildet, bei der es sich beispielsweise um einen O-Ring aus einem geeignetem Material handelt, z. B. Teflon.

Die fluiddichte Dichtung 213 unterteilt das Haltebauteil 200 in einen unteren Anschnitt 214 und einen oberen Abschnitt 215. Bei einer Untersuchung der Meßprobe 211 in einem Fluid dichtet die fluiddichte Dichtung 213 einen Bereich, in dem das Fluid die Meßprobe 211 bedeckt und welcher im wesentlichen die Oberfläche des unteren Abschnitts 214 umfaßt, von dem Bereich des oberen Abschnitts 215 ab.

An dem Haltebauteil 200 ist ein Befestigungsbauteil 216 angebracht, welches zum Befestigen des Haltebauteils 200 in der Meßanordnung des Rastersondenmikroskops (vgl. Figur 1) genutzt wird. Das Befestigungsbauteil 216 ist bei der dargestellten Ausführungsform ringförmig gebildet, so daß es das Haltebauteil 200 im Bereich des oberen Abschnitts 215 umgreift und festhält. An dem Befestigungsbauteil 216 ist ein piezo-keramisches Festkörperelement 217 angebracht. Des weiteren ist auf dem Befestigungsbauteil 216 eine Spule 218 montiert. Die Spule 218 und das piezo-keramische Festkörperelement 217 dienen dazu, die Meßspitze 210 in eine Oszillation zu versetzen, so daß mit Hilfe des Rastersondenmikroskops, welches die Anordnung nach Figur 2 umfaßt, dynamische Untersuchuhgsmethoden der Rastersondenmikroskopie ausgeführt werden können.

In einer bevorzugten Ausführungsform sind das Haltebauteil 200 und das Befestigungsbauteil 216 einteilig ausgeführt, beispielsweise aus Glas.

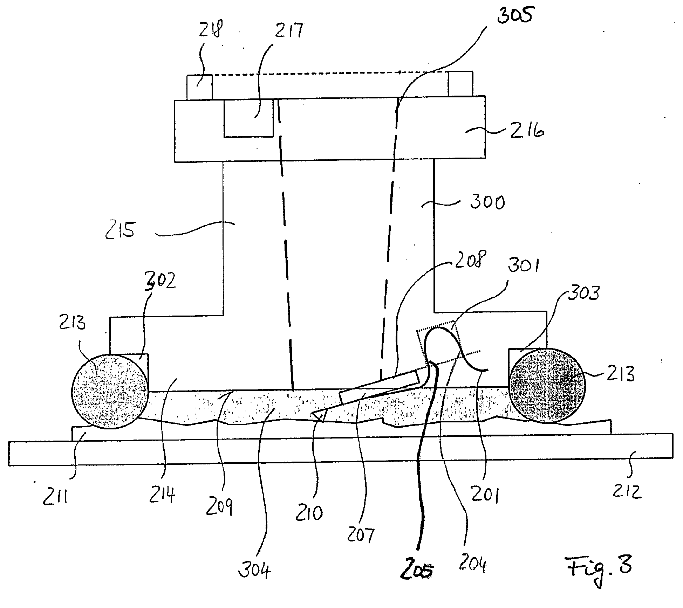

Figur 3 zeigt eine Anordnung mit einem anderen Haltebauteil 300. In Verbindung mit Figur 3 werden für gleiche Merkmale die in Figur 2 genutzten Bezugszeichen verwendet. An dem anderen Haltebauteil ist eine Vertiefung 301 im Bereich der unteren Oberfläche 209 des anderen Haltebauteils 300 gebildet In der Vertiefung 301 ist das Klemmbauteil 201 selbstarretierend in der Weise gehalten, wie dies in Verbindung mit Figur 2 beschrieben wurde. Mit Hilfe der von dem Klemmbauteil 201, welches bei der Ausführung nach Figur 3 als Federbauteil ausgeführt ist, wird die Meßsonde 207 in der weiteren Vertiefung 208 gehalten, so daß die Meßspitze 210 wieder von der unteren Oberfläche 209 absteht und die Meßsonde 207 geneigt ist.

Im Unterschied zu der Ausführungsform nach Figur 2 ist die fluiddichte Dichtung 213 bei der Ausführungsform nach Figur 3 in Eckbereichen 302, 303 des anderen Haltebauteils 300 angeordnet, welche unmittelbar an die untere Oberfläche 209 des anderen Haltebauteils 300 grenzen. Auf diese Weise kann die bei der Untersuchung der Meßprobe 211 benötigte Fluidmenge 304 minimiert werden. An dem anderen Haltebauteil 300 ist wie bei der Ausführungsform nach Figur 2 ein Befestigungsbauteil 216 angebracht, an dem sich ein piezo-keramisches Festkörperelement 217 und eine Spule 218 befinden.

Das Haltebauteil 200 und das andere Haltebauteil 300 können ganz oder teilweise aus einem lichttransparenten Material sein und somit die Funktion des Glaskörpers 7 in der Meßanordnung 100 nach Figur 1 übernehmen. Bei einer teilweisen Fertigung aus dem lichttransparenten Material ist, wie dies beispielhaft in Figur 3 gezeigt ist, ein Lichtdurchgangsabschnitt 305 gebildet. Bei dem Material handelt es sich beispielsweise um Glas oder Plexiglas. Die zumindest teilweise lichttransparente Ausgestaltung des Haltebauteils 200 und des anderen Haltebauteils 300 erlaubt die Durchführung von rastersondenmikroskopischen Untersuchungen sowohl in Luft als auch in Flüssigkeiten, ohne daß die Messanordnung verändert werden muß. Auf diese Weise werden im Vergleich zum Stand der Technik die in der Regel sehr teueren separaten Flüssigkeitszellen eingespart.

Die Befestigung der Meßsonde 202 mit Hilfe des selbstarretierenden Klemmbauteils 201 erleichtert das Abnehmen der Meßsonde, beispielsweise beim Austausch oder zum Reinigen der Meßsonde 202. Aufgrund der Selbstarretierung kann das Klemmbauteil 201 leicht an dem Haltebauteil 200 bzw. dem anderen Haltebauteil 300 montiert und wieder gelöst werden. Bei den Ausführungsformen nach den Figur 2 und 3 kann das Klemmbauteil 201 einfach dadurch von dem Haltebauteil 200 bzw. dem weiteren Haltebauteil 300 gelöst werden, daß die Abschnitte 204, 205 des Klemmbauteils 201 gegen die Federkraft des Klemmbauteils 201 leicht zusammengedrückt werden.

Die Anordnung des Klemmbauteils 201 im unteren Bereich 214 des Haltebauteils erlaubt eine Ausgestaltung der Meßanordnung für das Rastersondenmikroskop, bei der das Klemmbauteil 201 nicht durch die fluiddichte Dichtung 213 hindurch geführt werden muß, was die bei bekannten Vorrichtungen oft auftretenden Dichtungsprobleme lindert bzw. vollständig verhindert.

Um eine Verwendung der Vorrichtungen nach den Figuren 2 und 3 in Verbindung mit verschiedenen Fluiden zu ermöglichen, kann das Klemmbauteil 201 mit einer Materialschicht überzogen sein, die mit dem jeweiligen Fluid nicht chemisch reagiert. Beispielsweise kann eine Stahlklemmfeder mit einem Goldbüberzog versehen sein. Aber auch eine Beschichtung mit Polytetrafluorethylen (PTFE) kann in Abhängigkeit von der Anwendung verwendet werden.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Vorrichtung zum Halten einer Meßsonde für ein Rasterkraftmikroskop, mit:
- einem Haltebauteil (200; 300) zur Montage in einer Meßanordnung eines Rasterkraftmikroskops,
- einer Meßsonde (207), bei der es sich um einen sogenannten Cantilever handelt,
- einer Meßspitze (210), die an einem Ende des Cantilevers angeordnet ist,
- einem als Feder ausgebildeten Klemmbauteil (201), das mittels einer Selbstarretierung des Klemmbauteils (201) an dem Haltebauteil (200; 300) befestigt ist und mit dem die Meßsonde (207) an dem Haltebauteil (200; 300) lösbar befestigt ist, wobei die Meßsonde (207) sich in unmittelbarem Kontakt mit dem Klemmbauteil (201) und dem Haltebauteil (200; 300) befindet,
**dadurch gekennzeichnet, daß**
- die Selbstarretierung des Klemmbauteils (201) in einer Vertiefung (220; 301) an dem Haltebauteil (200; 300) gebildet ist,
- bei der Selbstarretierung das Klemmbauteil (201) in der Vertiefung (202) aufgrund einer Federkraft gehalten wird, so daß Abschnitte (204, 205) des Klemmbauteils (201) gegen eine Innenwand (206) der Vertiefung (202) drücken, und
- das Klemmbauteil (201) von dem Haltebauteil (200; 300) lösbar ist, indem die Abschnitte (204, 205) gegen die Federkraft des als Feder ausgebildeten Klemmbauteils (201) zusammengedrückt werden.

2. Vorrichtung nach Anspruch 1, **dadurch gekennzeichnet, daß** das Klemmbauteil (201) an dem Haltebauteil (200; 300) lösbar befestigt ist.

3. Vorrichtung nach Anspruch 1 oder 2, **dadurch gekennzeichnet, daß** das Klemmbauteil (201) ein Federbauteil ist.

4. Vorrichtung nach einem der vorangehenden Ansprüche, **dadurch gekennzeichnet, daß** das Klemmbauteil (201) eine Beschichtung aufweist.

5. Vorrichtung nach einem der vorangehenden Ansprüche, **dadurch gekennzeichnet, daß** ein Montageabschnitt der Meßsonde (207) zumindest teilweise in einer an dem Haltebauteil (200; 300) gebildeten weiteren Vertiefung (208) angeordnet ist.

6. Vorrichtung nach einem der vorangehenden Ansprüche, **dadurch gekennzeichnet, daß** die Meßsonde (202) mit Hilfe des Klemmbauteils (201) im Bereich einer unteren Oberfläche (209) des Haltebauteils (200; 300) und mit einer Neigung zu der unteren Oberfläche (209) gehalten wird, so daß eine Meßspitze (210) der Meßsonde (202) von der unteren Oberfläche (209) absteht.

7. Vorrichtung nach Anspruch 6, **dadurch gekennzeichnet, daß** das Klemmbauteil (201) im Bereich der unteren Oberfläche (209) an dem Haltebauteil (300) befestigt ist.

8. Vorrichtung nach einem der vorangehenden Ansprüche, **dadurch gekennzeichnet, daß** das Klemmbauteil (201) in einem Bereich (214) des Haltebauteils (200; 300) montiert ist, welcher mittels einer fluiddichten Dichtung (213) von einem anderen Bereich (215) des Haltebauteils (200) abgegrenzt ist.

9. Vorrichtung nach einem der vorangehenden Ansprüche, **dadurch gekennzeichnet, daß** das Klemmbauteil (201) auf einer Seitenfläche (203) des Haltebauteils (200) befestigt ist.

10. Vorrichtung nach einem der vorangehenden Ansprüche, **dadurch gekennzeichnet, daß** das Haltebauteil (200; 300) einen Lichtdurchgangsabschnitt (305) aus einem lichttransparenten Material aufweist, so daß Lichtstrahlen durch den Lichtdurchgangsabschnitt (305) zu der Meßsonde (202) oder von der Meßsonde (202) durch den Lichtdurchgangsabschnitt (305) gelangen können.

11. Vorrichtung nach Anspruch 10, **dadurch gekennzeichnet, daß** eine obere und eine untere Stirnfläche des Lichtdurchgangsabschnitts (305) poliert sind.

12. Vorrichtung nach Anspruch 10 oder 11, **dadurch gekennzeichnet, daß** zumindest der Lichtdurchgangsabschnitt (305) aus Glas oder Plexiglas ist.

13. Vorrichtung nach einem der vorangehenden Ansprüche, **dadurch gekennzeichnet, daß** an dem Haltbauteil (200; 300) eine Spule (218) angeordnet ist.

14. Vorrichtung nach einem der vorangehenden Ansprüche, **dadurch gekennzeichnet, daß** an dem Haltbauteil (200; 300) ein Piezo-Bauteil (217) angeordnet ist.

15. Vorrichtung nach einem der vorangehenden Ansprüche, **dadurch gekennzeichnet, daß** an dem Haltbauteil (200; 300) ein Befestigungsbauteil (216) angeordnet ist.

## Claims

1. A device for mounting a probe to a scanning probe microscope, comprising:
- a retaining member (200; 300) for installation in a measuring assembly of a scanning probe microscope,
- a probe (207), which is a cantilever,
- a measuring tip (210), which is arranged on an end of the cantilever,
- a clamping member (201) which is formed as a spring member and which is secured in a self-locking fashion to the retaining member (200; 300), wherein the probe (207) is detachably mounted on the retaining member (200; 300) by the clamping member (201), wherein the probe (207) is in direct contact with the clamping member (201) and the retaining member (200; 300),
**characterized in that**
- the self-locking of the clamping member (201) is realized in a recess (220; 301) formed in the retaining member (200; 300),
- for the self-locking the clamping member (201) is held in the recess (220; 301) by a spring force such that sections (204, 205) of the clamping member (201) are pressed against an inner wall (206) of the recess (202), and
- the clamping member (201) is detachable from the retaining member (200; 300) by pressing the sections (204, 205) against the spring force of the clamping member (201) formed as spring member.

2. The device as claimed in claim 1, **characterized in that** the clamping member (201) is detachably mounted on the retaining member (200; 300).

3. The device as claimed in claim 1 or 2, **characterized in that** the clamping member (201) is a spring member.

4. The device as claimed in any one of the preceding claims, **characterized in that** the clamping member (201) comprises a coating.

5. The device as claimed in any one of the preceding claims, **characterized in that** a mounting portion of the probe (207) is disposed at least partly in another recess (208) formed in the retaining member (200; 300).

6. The device as claimed in any one of the preceding claims, **characterized in that** the probe (202) is held by means of the clamping member (201) in the area of a bottom surface (209) of the retaining member (200; 300) and at an inclination with respect to the bottom surface (209) so that a measuring tip (210) of the probe (202) protrudes from the bottom surface (209).

7. The device as claimed in claim 6, **characterized in that** the clamping member (201) is fixed to the retaining member (300) in the area of the bottom surface (209).

8. The device as claimed in any one of the preceding claims, **characterized in that** the clamping member (201) is mounted in an area (214) of the retaining member (200; 300) which area is separated from another area (215) of the clamping member (200) by a fluid-tight seal (213).

9. The device as claimed in any one of the preceding claims, **characterized in that** the clamping member (201) is fastened at a side surface (203) of the retaining member (200).

10. The device as claimed in any one of the preceding claims, **characterized in that** the retaining member (200; 300) comprises a light passage portion (305) of transparent material so that light rays may pass through the light passage portion (305) to the probe (202) or from the probe (202) through the light passage portion (305).

11. The device as claimed in claim 10, **characterized in that** upper and lower end faces of the light passage portion (305) are polished.

12. The device as claimed in claim 10 or 11, **characterized in that** at least the light passage portion (305) is made of glass or plexiglass.

13. The device as claimed in any one of the preceding claims, **characterized in that** a coil (218) is disposed on the retaining member (200; 300).

14. The device as claimed in any one of the preceding claims, **characterized in that** a piezo structural element (217) is disposed on the retaining member (200; 300).

15. The device as claimed in any one of the preceding claims, **characterized in that** a fastening member (216) is disposed on the retaining member (200; 300).

## Revendications

1. Dispositif pour maintenir une sonde de mesure pour un microscope à force atomique, avec :
- un élément de maintien (200 ; 300) pour le montage dans un agencement de mesure d'un microscope à force atomique,
- une sonde de mesure (207), concernant laquelle il s'agit d'un dénommé levier,
- une pointe de mesure (210), laquelle est disposée à une extrémité du levier,
- un élément de serrage (201) réalisé en tant que ressort, lequel est fixé au moyen d'un auto-blocage de l'élément de serrage (201) sur l'élément de maintien (200 ; 300) et avec lequel la sonde de mesure (207) est fixée de manière détachable sur l'élément de maintien (200 ; 300), dans lequel la sonde de mesure (207) se trouve en contact direct avec l'élément de serrage (201) et l'élément de maintien (200 ; 300),
**caractérisé en ce que**
- l'auto-blocage de l'élément de serrage (201) est réalisé dans un creux (220 ; 301) sur l'élément de maintien (200 ; 300),
- lors de l'auto-blocage, l'élément de serrage (201) étant maintenu dans le creux (202) en raison d'une force élastique de telle sorte que des parties (204, 205) de l'élément de serrage (201) poussent contre une paroi intérieure (206) du creux (202), et
- l'élément de serrage (201) étant détachable de l'élément de maintien (200 ; 300) en ce que les parties (204, 205) sont comprimées à l'encontre de la force élastique de l'élément de serrage (201) réalisé en tant que ressort.

2. Dispositif selon la revendication 1, **caractérisé en ce que** l'élément de serrage (201) est fixé de manière détachable sur l'élément de maintien (200 ; 300).

3. Dispositif selon la revendication 1 ou 2, **caractérisé en ce que** l'élément de serrage (201) est un élément de ressort.

4. Dispositif selon l'une des revendications précédentes, **caractérisé en ce que** l'élément de serrage (201) présente un revêtement.

5. Dispositif selon l'une des revendications précédentes, **caractérisé en ce qu'**une partie de montage de la sonde de mesure (207) est disposée au moins partiellement dans un autre creux (208) formé sur l'élément de maintien (200 ; 300).

6. Dispositif selon l'une des revendications précédentes, **caractérisé en ce que** la sonde de mesure (202) est maintenue à l'aide de l'élément de serrage (201) dans la zone d'une surface inférieure (209) de l'élément de maintien (200 ; 300) et avec une inclinaison vers la surface inférieure (209) de telle sorte qu'une pointe de mesure (210) de la sonde de mesure (202) est en saillie par rapport à la surface inférieure (209).

7. Dispositif selon la revendication 6, **caractérisé en ce que** l'élément de serrage (201) est fixé sur l'élément de maintien (300) dans la zone de la surface inférieure (209).

8. Dispositif selon l'une des revendications précédentes, **caractérisé en ce que** l'élément de serrage (201) est monté dans une zone (214) de l'élément de maintien (200 ; 300) qui est délimitée au moyen d'un joint étanche aux fluides (213) d'une autre zone (215) de l'élément de maintien (200).

9. Dispositif selon l'une des revendications précédentes, **caractérisé en ce que** l'élément de serrage (201) est fixé sur une surface latérale (203) de l'élément de maintien (200).

10. Dispositif selon l'une des revendications précédentes, **caractérisé en ce que** l'élément de maintien (200 ; 300) présente une partie de passage de lumière (305) en un matériau transparent à la lumière de telle sorte que des rayons lumineux puissent aller vers la sonde de mesure (202) à travers la partie de passage de lumière (305) ou à partir de la sonde de mesure (202) à travers la partie de passage de lumière (305).

11. Dispositif selon la revendication 10, **caractérisé en ce qu'**une surface frontale supérieure et inférieure de la partie de passage de lumière (305) sont polies.

12. Dispositif selon la revendication 10 ou 11, **caractérisé en ce qu'**au moins la partie de passage de lumière (305) est en verre ou en plexiglas.

13. Dispositif selon l'une des revendications précédentes, **caractérisé en ce qu'**une bobine (218) est disposée sur l'élément de maintien (200 ; 300).

14. Dispositif selon l'une des revendications précédentes, **caractérisé en ce qu'**un élément piézoélectrique (217) est disposé sur l'élément de maintien (200 ; 300).

15. Dispositif selon l'une des revendications précédentes, **caractérisé en ce qu'**un élément de fixation (216) est disposé sur l'élément de maintien (200 ; 300).
